# EUROPÄISCHE PATENTANMELDUNG

(11) **EP 0 554 487 A1**
(43) Veröffentlichungstag der Anmeldung: **11.08.1993**
(21) Anmeldenummer: 92101921.2
(22) Anmeldetag: 05.02.1992
(51) Int. Cl.: B01D 53/34

(54) **Verfahren zum Reinigen von Rauchgasen**

(71) Anmelder: DEUTSCHE VOEST-ALPINE INDUSTRIEANLAGENBAU GMBH, D-40219 Düsseldorf (DE)
(72) Erfinder: Hartweck, Winfried G., Dr., W-4000 Düsseldorf-Wittlaer (DE); Hahn, Ulrich, W-4600 Dortmund (DE)
(74) Vertreter: Pfenning, Meinig & Partner

(57) **Zusammenfassung**

Es wird ein Verfahren zum Reinigen von Rauchgasen vorgeschlagen, bei dem zur chemischen Entfernung der Verunreinigungen in die Wirbelschicht eines Wirbelschichtreaktors, durch die das Rohgas von unten eingeleitet wird, geeignete Reaktionsmittel, wie Kalkmilch eingebracht werden und die trockenen Feststoff-Reaktonsprodukte aus dem Wirbelgas ausgeschieden werden. Das Reaktionsmittel 2 wird in einen einen rechteckigen Querschnitt aufweisenden Reaktorbehälter 13 gleichmäßig über dessen Querschnitt verteilt eingebracht und zwar in einer Ebene 17 oberhalb eines das Wirbelbett 12 aufnehmenden Bodens 18 und in einer zweiten Ebene 16 unterhalb dieses Bodens innerhalb der Verteilerkammer. Ein Teil des Reaktionsmittels 2 wird vor Einbringung des Rohgases 1 in die Verteilerkammer 11 diesem Rohgas 1 unmittelbar zugeführt.

## Beschreibung

Die Erfindung bezieht sich auf ein Verfahren zum Reinigen von Rauchgasen, bei dem zur chemischen Entfernung der Verunreinigungen in die Wirbelschicht eines Wirbelschichtreaktors, durch die das Rohgas von unten eingeleitet wird, geeignete Reaktionsmittel wie Kalkmilch eingebracht werden und die trockenen Feststoffreaktionsprodukte aus dem Wirbelgas ausgeschieden werden.

Derartige Verfahren sind ganz allgemein bekannt. Ein darüber hinaus bekanntes Verfahren zur Trockenentschwefelung und Beseitigung anderer Verunreinigungen in Rauchgasen von Kohlekraftwerken oder Müllverbrennungsanlagen verwendet als Absorptionsmittel beispielsweise trockenes Kalkhydrat, so daß ein Feststoffgemisch aus Kalziumsulfit und Kalziumsulfat zusammen mit überschüssigem Kalkhydrat anfällt. Hierbei kann auf die Verwendung eines Wirbelbettes verzichtet werden, wenn eine intensive Durchmischung und Wärmeabgabe des Rohgases an das Reaktionsmittel nicht erforderlich ist. Ansonsten wird nach diesem Verfahren das Reaktionsmittel unmittelbar in die Rohgasstrecke, gegebenenfalls vor einem in dieser liegenden Reaktor, eingegeben und einer nachgeschalteten Filtereinrichtung wie Gewebefiltern bzw. Elektrofiltereinrichtungen zugeführt. Der hier anfallende Feststoffaustrag durchläuft einen oder mehrere Zyklonabscheider und kann dann aus der zugehörigen Anlage getrennt vom gereinigten Abgas ausgetragen werden (DE-OS 31 17 601).

Neben dieser trockenen Reinigung sind auch nasse Reinigungsverfahren bekannt, bei denen die alkalischen Kalziumverbindungen als Absorptionsmittel in flüssiger Form in das Rohgas eingedüst werden (DE-OS 33 34 106). Bei dieser bekannten Reinigung des Rauchgases von Schwefeldioxid fällt gleichfalls ein trockener sulfithaltiger Abfall an, der nachfolgend beispielsweise in einem Drehofen zu Sulfat in Form von Anhydrid oxidiert wird.

Nachteilig bei diesen Verfahren ist, daß das mehrfach stöchiometrisch zugegebene Reaktionsmittel wie beispielsweise Kalkhydrat, bezogen auf die Schadstoffe, nicht intensiv genug umgesetzt werden kann und insbesondere bei Schwankungen eine optimale Anpassung der Dosierung kaum möglich ist.

Der Erfindung liegt daher die Aufgabe zugrunde, das gattungsgemäße Verfahren unter Verwendung eines Wirbelbettes effektiver zu gestalten und insbesondere die Reaktionsmittelzugabe zu optimieren. Die Lösung dieser Aufgabe wird erfindungsgemäß durch die im Kennzeichen des Anspruches 1 angegebenen Merkmale erreicht.

Vorteilhafte Weiterbildungen dieser Aufgabenlösung ergeben sich aus den Unteransprüchen.

Mit der erfindungsgemäßen Verfahrensweise kann vorteilhaft Rauchgas von den in ihm anfallenden Verunreinigungen, und zwar nicht nur von SO₂, sondern je nach Verwendung geeigneter Absorptionsmittel auch von Stickoxiden (NOₓ), Fluorwasserstoffen (FCKW) oder beliebigen Säurekomponenten unter minimalem Energieaufwand und optimierter Vorrichtungsanordnung gereinigt werden. Hierfür ist die Verwendung eines Wirbelbettes in rechteckiger Form besonders günstig mit einer gleichmäßigen bzw. homogenen Verteilung der Schichtaktivität über den gesamten Querschnitt des Wirbelbettes. Übliche Wirbelbettsubstanzen wie Sand, Quarz oder Glasgrus mit möglichst definierter Korngröße können zur Anwendung kommen.

Eine besonders wirkungsvolle Wirbelbettaktivität, die auch Rohgasschwankungen berücksichtigt, kann durch die Anordnung der Züführung von Absorptionsmitteln in zwei Ebenen erreicht werden. Diese Ebenen sollten einmal innerhalb der Verteilerkammer des Reaktors unterhalb des Wirbelbettes und zum anderen direkt im Wirbelbett liegen. Auch durch zusätzliche direkte Zuführung von Absorptionsmitteln unmittelbar in die Rohgasleitung wird nicht nur in überraschend einfacher Weise sowohl hinsichtlich des quantitativen Anfalls als auch qualitativer Veränderungen in der Zusammensetzung der Verunreinigungen eine Steuerung vorgenommen, sondern diese auch in besonders wirkungsvoller Weise optimiert. Hierfür wirkt unterstützend eine besondere matrixartige Düsenanordnung in der einen oder in beiden Ebenen für die Reaktionsmittelzuführung. Es hat sich herausgestellt, daß rechteckige Wirbelschichtreaktoren mit einem Querschnitt, dessen Längen/Breitenverhältnis zwischen 6:1 und 2:1 liegt, besonders effektiv arbeiten.

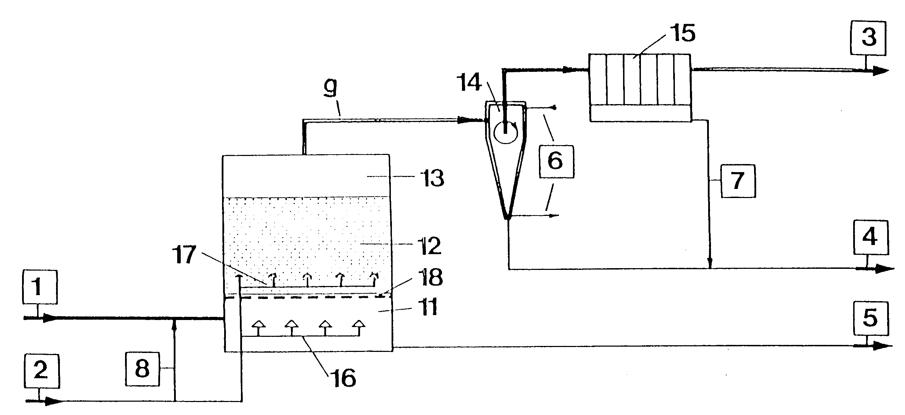

Weitere Vorteile und Einzelheiten des erfindungsgemäßen Verfahrens sollen nachfolgend anhand der beiliegenden Zeichnung, die eine schematisierte beispielsweise Ausführungsform wiedergibt, näher erläutert werden.

Wie dargestellt, wird das von einer Verbrennungsanlage abgegebene Abgas bzw. Rauchgas als Rohgas über eine Leitung 1 unmittelbar einem Wirbelbettreaktor zugeführt. Der Reaktionsbehälter 13 weist hierfür eine untere Verteilerkammer 11 auf, die mit dem über ihr angeordneten Wirbelbett 12 durch einen Rost 18 getrennt ist, der aus einem Lochblech, einem Stabrost, einem Schlitzboden oder dergleichen durchlässigen Auflage für das Wirbelbettmaterial bestehen kann. Das Wirbelbettmaterial kann Sand, Quarz, Glasgrus oder ein ähnliches gegenüber dem Rohgas und seiner Verunreinigungen inertes Material sein, wobei wegen der gegebenen Anströmgeschwindigkeit eine definierte Korngröße bzw. Korngrößenverteilung vorzugeben ist. Außer der Rohgasleitung 1 mündet in die untere Verteilerkammer 11 des Reaktionsbehälters 13 eine das Reaktionsmittel führende Leitung 2. Das Absorptions- bzw. Reaktionsmittel kann in trockener oder flüssiger Form zugegeben werden. Im Ausführungsbeispiel, wo es auf zwei Düsenebenen verteilt wird, handelt es sich um flüssiges Reaktionsmittel wie beispielsweise Kalkmilch. Innerhalb der Verteilerkammer 11 wird die Leitung 2 des Reaktionsmittels auf zwei Verteilerebenen 16 und 17 aufgeteilt. Die untere Verteilerebene besteht wie die obere Verteilerebene im Ausführungsbeispiel aus einer matrixförmig angeordneten Düsenvielzahl. Die untere Verteilerebene 16 liegt innerhalb der Verteilerkammer 11 unterhalb des Wirbelbettrostes 18. Die obere Verteilerebene 17 liegt oberhalb des als Lochblech oder Schlitzboden ausgebildeten Rostes 18 direkt in der Wirbelschicht 12, und zwar unweit oberhalb des Rostes 18, wobei im Normalfall durch diese obere Verteilerebene 17 der Hauptanteil des Reaktionsmittels dem Rohgas für eine intensive Durchmischung zugeführt wird. Vor Eintritt in die Verteilerkammer 11 ist eine Verzweigung in die Reaktionsmittelleitung 2 mit einer Dosiervorrichtung 8 eingeschaltet, die die Leitung 2 mit der Rohgasleitung 1 direkt verbindet, so daß die trockenen oder flüssigen Absorbenzien auch über diesen Nebenschluß dem Rohgas zuführbar sind, bevor dieses in die Verteilerkammer des Reaktionsbehälters 13 eingeleitet wird. Es ist auch denkbar, daß über die Dosiervorrichtung 8 andere Reaktionsmittel als über die Verteilerleitung 2 in die Rohgasleitung 1 eingespeist werden. Die untere Verteilerebene 16 düst Reaktionsmittel in die Verteilerkammer 11 unmittelbar unterhalb des Wirbelschichtrostes 18 ein, was unter Normalbedingungen des Verfahrensablaufes eine Sicherheitsmaßnahme dahingehend darstellt, daß stets ausreichend im stöchiometrischen Überschuß Reaktionsmittel vorhanden ist. Das sich im Bodenbereich der Verteilerkammer 11 sammelnde überschüssige Reaktionsmittel kann über eine Rückführleitung 5 abgezogen werden. Das durch den Wirbelschichtrost 18 aus der Verteilerkammer 11 in das Wirbelbett 12 eintretende Rohgas aktiviert durch die ihm innewohnende kinetische Energie, also die eigene Strömungsgeschwindigkeit, das Wirbelbett, und zwar weitgehend gleichmäßig über den gesamten Querschnitt des Reaktionsbehälters 13 verteilt. Entsprechend den vorhandenen gasförmigen Verunreinigungen innerhalb des Rohgases, das heißt der Schwefel-, Chlor- und/oder Fluorkomponente sowie andere Kontaminationen und entsprechend der Wahl des Reaktionsmittels - entspricht hier Kalkmilch - reagiert das Rohgas bei intensivster Durchmischung und Energieübertragung über das Wirbelbett mit diesem eingedüsten Absorptionsmittel, so daß Kalziumsulfat, Kalziumchlorid, Kalziumfluorid und dergleichen Salze in fester Form anfallen, die infolge ihrer staubförmigen Konfiguration aus dem Wirbelbett 12 in Aufwärtsrichtung ausgetragen werden und im oberen wirbelbettfreien Raum des Reaktionsbehälters 13 der sogenannten Entspannungskammer sich sammelnd über einen Kopfabzug zusammen mit dem Reingas abgezogen werden können. Die Verbindungsleitung 9 bringt das Reingas/Feststoffgemisch in einen ersten Staubabscheider 1, der in Form eines beheizten Zyklonabscheiders 14 Anwendung findet, mit der Heizung 6, aus dem sich dann der getrocknete Feststoff zur Abgabe 4 abführen läßt, während das Reingas in einen weiteren Staubabscheider, beispielsweise einen Schlauchfilter, eingebracht wird, um von hier nachfolgend über einen Reingasabzug 3 die Anlage zu verlassen. Die sich im Schlauchfilter 15 noch ansammelnden Feststoffe werden über die Feststoffabgabe 7 gleichfalls der Feststoffabgabe 4 hinzuaddiert.

Die dosiert vorgebbare Mischung von Reaktionsmittel vor Eintritt des Rohgases in die Verteilerkammer 11 direkt innerhalb der Rohgasleitung 1 einerseits und die quantitativ gegebenenfalls variierbare Zuführung von Reaktionsmittel über zwei Verteilerebenen 16 und 17 ermöglicht eine verzögerungfreie und optimale Anpassung der Reaktionsmittelzugabe zu dem Rohgas vor bzw. unmittelbar nach Einbringung desselben in das Wirbelbett 12, über das dann eine intensive Durchmischung aller Komponenten sichergestellt ist. Durch die in dem Rohgas vorhandene thermische Energie wird der im Wirbelbett 12 anfallende Wasseranteil so vollständig verdampft und verläßt den Reaktionsbehälter 13 über die Leitung 9 gasförmig, daß ein trockenes Reaktionsprodukt entsteht, welches in seiner Konfiguration so feinkörnig ist, daß es einem Pulver gleicht, so daß es ohne Schwierigkeiten durch die Strömungsenergie aus dem Reaktionsbehälter 13 ausgetragen wird.

Noch vorhandene Restfeuchtigkeit im festen Reaktionsprodukt wird mittels der Heizung 6 im Zyklonabscheider 14 ausgetrieben, wodurch gleichzeitig in vorteilhafter Weise Nachreaktionen stattfinden können, so daß weitere Restverunreinigungen ausfallen, was entsprechend auch für das nachgeschaltete Schlauchfilter 15 gelten kann. Das durch die Strömungsenergie des Rohgases betriebene Wirbelbett 12 bedarf sowohl hinsichtlich der erforderlichen kinetischen Energie als auch der thermischen Energie keiner äußeren Energiequelle, wobei eine vorteilhafte Abkühlung des in aller Regel heiß eintretenden Rauchgases auf die gewünschte Abgabetemperatur des Reingases erfolgt. Die abgeschiedenen festen Reaktionsprodukte können ganz oder teilweise in die Wirbelschicht rezirkuliert werden.

## Patentansprüche

1. Verfahren zum Reinigen von Rauchgasen, bei dem zur chemischen Entfernung der Verunreinigungen in die Wirbelschicht eines Wirbelschichtreaktors, durch die das Rohrgas von unten eingeleitet wird, geeignete Reaktionsmittel wie Kalkmilch eingebracht werden und die trockenen Feststoff-Reaktionsprodukte aus dem Wirbelgas ausgeschieden werden,
**dadurch gekennzeichnet,**
daß das Reaktionsmittel (2) in einem einen rechteckigen Querschnitt aufweisenden Reaktorbehälter (13) gleichmäßig über dessen Querschnitt verteilt in einer Ebene (17) oberhalb eines das Wirbelbett (12) aufnehmenden Bodens (18) und in einer zweiten Ebene (16) unterhalb dieses Bodens innerhalb der Verteilerkammer (11) ausgebracht wird, und
daß wenigstens ein Teil des Reaktionsmittels (2) vor Einbringung des Rohgases (1) in die Verteilerkammer (11) diesem Rohgas (1) unmittelbar zugeführt wird.

2. Verfahren nach Anspruch 1,
dadurch gekennzeichnet, daß die beiden Eingabeebenen (16, 17) je durch eine matrixartige Düsenanordnung gebildet sind, wobei über die untere Düsenebene nur ein geringer Anteii an Reaktionsmittel (2) ausgebracht wird.

3. Verfahren nach Anspruch 1,
dadurch gekennzeichnet, daß eine Wirbelschicht (12) mit rechteckigem Querschnitt verwendet wird, deren Längen/Breitenverhältnis von 6:1 bis 2:1 beträgt.

4. Verfahren nach wenigstens einem der Ansprüche 1 bis 3,
dadurch gekennzeichnet, daß das Wirbelgas nach Verlassen des Reaktorbehälters (13) nacheinander zunächst durch einen Zyklonabscheider (14) und dann durch ein Abscheidefilter (15) gegeben wird.

5. Verfahren nach Anspruch 1,
dadurch gekennzeichnet, daß die unmittelbare Zuführung des Rohgases (1) in die Anströmleitung zur Verteilerkammer (11) erfolgt.

6. Verfahren nach Ansprüchen 1 bis 5,
dadurch gekennzeichnet, daß die abgeschiedenen festen Reaktionsprodukte wenigstens teilweise in die Wirbelschicht rezirkuliert werden.
